# EUROPÄISCHE PATENTSCHRIFT

(11) **EP 2 049 866 B1**
(45) Veröffentlichungstag und Bekanntmachung des Hinweises auf die Patenterteilung: **03.03.2010**
(21) Anmeldenummer: 07801175.6
(22) Anmeldetag: 26.07.2007
(51) Int. Cl.: G01B 5/012, G01B 7/012

(54) **SPRITZGUSSFIXIERUNG FÜR TASTSTIFTE**
INJECTION-MOULDING FIXING FOR FEELERS
FIXATION PAR MOULAGE PAR INJECTION POUR DES PALPEURS

(30) Priorität: 27.07.2006 DE 102006035540
(43) Veröffentlichungstag der Anmeldung: 22.04.2009
(73) Patentinhaber: Carl Zeiss 3D Automation GmbH, 73457 Essingen b. Aalen (DE)
(72) Erfinder: RICHTER, Frank, 89522 Heidenheim (DE); FRANKENFELD, Thomas, 73529 Schwäbisch Gmünd (DE)
(74) Vertreter: Pietruk, Claus Peter
(86) Internationale Anmeldenummer: PCT/DE2007/001333
(87) Internationale Veröffentlichungsnummer: WO 2008/011878

(56) Entgegenhaltungen:
- EP-A- 1 024 341
- WO-A-95/22739
- US-A- 4 270 275

## Beschreibung

Die vorliegende Erfindung betrifft das oberbegrifflich Beanspruchte und befasst sich demgemäß mit Taststiften.

Taststifte werden an Koordinatenmessmaschinen benötigt, um ein Werkstück abzutasten. Dazu ist der Taststift typisch an einem beweglichen Arm einer Koordinatenmessmaschine angeordnet und wird mit diesem über das Werkstück bewegt. Wenn der Taststift das mit der Koordinatenmessmaschine auszumessende Werkstück berührt, wird ein Signal erzeugt, aus welchem auf die zu messenden Größen geschlossen werden kann.

Der Taststift unterliegt bei diesem Verfahren einem nicht unerheblichen Verschleiß, etwa dann, wenn er in kontinuierlicher Berührung ("scannend") über das Werkstück bewegt wird und damit Abrieb unterliegt, oder Material von dem Werkstück abreibt, also Aufrieb unterliegt usw. In derartigen Fällen ist die Messgenauigkeit erheblich beeinträchtigt.

Um hohe Genauigkeiten mit Koordinatenmessmaschinen zu erhalten, ist daher ein regelmäßiger Austausch der Taststifte erforderlich. Der Taststift selbst besteht deshalb typisch aus einem Schaft, an welchem die eigentliche, typisch kugelförmige Spitze befestigt ist, mit welcher der Taststift das auszumessende Werkstück berührt, sowie einem Ankopplungskörper, der den Schaft fixiert und der an den Arm der Koordinatenmessmaschine direkt oder indirekt angekoppelt wird; eine indirekte Ankopplung ist etwa erforderlich, wenn Zwischenstücke benötigt werden, um den Taststift im Winkel zum Arm auszurichten, Verlängerungen vorzusehen usw. Im vorliegenden Text wird mit dem Begriff "Ankopplung" stets sowohl auf eine direkte Ankopplung als auch auf eine indirekte Ankopplung Bezug genommen, sofern sich nicht aus dem Sinnzusammenhang oder expliziten Hinweisen etwas anderes deutlich ergibt.

Obwohl der Taststift somit ein regelmäßig auszutauschendes Verschleißelement ist, das möglichst preiswert sein soll, ist dessen ungeachtet eine hohe Präzision erforderlich. In bekannten Taststiften wird der Taststift in einen Aufnahmekörper eingeklebt und muss hierzu sorgfältig ausgerichtet werden. Dies ist eine manuelle Tätigkeit, die teuer ist.

Aus WO95/22739 ist ein Schaft bekannt, der im Aufnahmekörper durch Schrauben fixiert ist.

Die Aufgabe der vorliegenden Erfindung besteht darin, Neues für die gewerbliche Anwendung bereitzustellen.

Die Lösung dieser Aufgabe wird in unabhängiger Form beansprucht; bevorzugte Ausführungsformen finden sich in den Unteransprüchen.

Die vorliegende Erfindung schlägt somit in einem ersten Grundgedanken einen Taststift mit einem Schaft und einem diesen fixierenden Ankopplungskörper zur Ankopplung an eine Koordinatenmessmaschine vor, bei welchem vorgesehen ist, dass der Schaft im Aufnahmekörper durch Spritzguss fixiert ist.

Ein erster wesentlicher Aspekt kann somit in der Erkenntnis gesehen werden, dass der Schaft durch einen hochautomatisierbaren, manuelle Klebe- und Ausrichtevorgänge entbehrlich machenenden Fixierungsschritt, nämlich durch Eingießen mit heißer Kunststoffspritzgussmasse im Aufnahmekörper zu fixieren ist. Dabei lassen sich überraschender Weise hohe Fertigungsgenauigkeiten erzielen, obwohl der Spritzguss typisch durch die heißen Temperaturen der einschießenden Spritzgussmasse und die damit einhergehende thermische Wechselbelastung sowie die wirkenden dynamischen Kräfte auf Schaft und Aufnahmekörper eine sehr hohe Präzision und Reproduzierbarkeit der Tastschaftfixierungen zunächst fraglich erscheinen lässt. Es wird davon ausgegangen, dass die mit Spritzguss erzielbare gute Fixierung auch durch thermische Dehnungs- und Schrumpfeffekte bedingt ist, wobei sich der Aufnahmekörper nach der Abkühlung der Spritzgussmasse stärker kontrahiert als der geometrisch kleinere, weil vom Aufnahmekörper durch Aufnahme darin umgebene Taststift. Die erzielbaren Auszugskräfte sind sehr hoch, eine mögliche Lockerung bei üblichen Umgebungsbedingungen unbeachtlich. Im Betrieb ist dann das Verhalten sogar verbessert gegenüber herkömmlichen Anordnungen. Dies liegt zum einem in der geringen Masse der Halterungen, die hohe Beschleunigungen eines Messarmes zulässt, ohne zu Torsions- sowie Biegebelastungen und resultierenden Schwingungen zu führen. Zudem dämpft die Kunststoffmasse eventuell auftretende Vibrationen des Taststiftes.

Prinzipiell ist es möglich, den Schaft aus unterschiedlichen Materialien vorzusehen, beispielsweise aus Keramik, Karbonfasern oder dergleichen; bevorzugt wird der Taststift jedoch mit einem Schaft aus Metall, insbesondere Hartmetall hergestellt. Dabei ist es auch bevorzugt, wenn die eigentliche Taststiftspitze durch eine Tastkugel gebildet ist, die wie üblich aus Rubin, Sternsaphir oder einem anderen, hinreichend harten Material gebildet sein kann; auf die Verwendbarkeit von Diamantkugeln sei explizit hingewiesen.

Der Ankopplungskörper kann prinzipiell auf eine Vielzahl unterschiedlicher Weisen gebildet werden. Bevorzugt ist es jedoch, wenn er eine Aufnahmebohrung hat, in welche der Schaft eindringen kann. Bevorzugt ist diese Schaftaufnahmebohrung als Durchgangsbohrung gebildet beziehungsweise besonders bevorzugt als insbesondere dünnwandiges Röhrchen oder dergleichen. Eine Dünnwandigkeit ist bevorzugt und gegeben, wenn zum Beispiel durch Schrumpfeffekte eine fixierende Klemmung mitbewirkt wird.

Es sei darauf hingewiesen, dass es prinzipiell möglich wäre, den Aufnahmekörper beispielsweise mehrteilig wie zum Beispiel mit Halbelementen herzustellen und darin den Schaft durch Zusammensetzen einzulegen oder auf andere Weise den Aufnahmekörper zu bilden. In einer bevorzugten Variante wird der Schaft durch den Aufnahmekörper hindurchtreten, insbesondere durch die Durchgangsbohrung hindurch, und über den eigentlichen Aufnahmekörper hinausragen. Dies hat Vorteile bei der Fertigung, weil dann der Schaft von zwei Seiten fixiert, also sowohl vor dem Aufnahmekörper als auch hinter dem Aufnahmekörper gehalten werden kann, während die Umspritzung stattfindet.

Der Aufnahmekörper kann auf verschiedene Weisen zur Ankopplung an die Koördinatenmessmaschine gebildet sein, beispielsweise mit einem Bajonettverschluss, 3-Punkt Lagerungen usw.; bevorzugt ist aber, wenn der Aufnahmekörper ein Gewinde besitzt, mit welchem er an der Koordinatenmessmaschine bzw. dazwischen geschalteten Elementen wie Verlängerungen usw. angekoppelt werden kann. Das Gewinde wird typisch ein Außengewinde sein, wobei das Gegengewinde so gebildet ist, dass der über den Aufnahmekörper hinausragende Schaft nicht anstößt.

Das Gewinde wird typisch von einer Anschlagplatte oder dergleichen umgeben sein. Über diese kann sichergestellt werden, dass das Gewinde bis zu einer hinreichenden Tiefe in eine Aufnahme eingedreht wird und im Übrigen eine korrekte Ausrichtung des Taststiftes relativ zum Koordinatenmessmaschinenarm erhalten wird. Bevorzugt ist es, wenn der Schaft mit dem Aufnahmekörper nicht nur im Bereich vor und hinter dem Aufnahmekörper verbunden ist, sondern wenn zwischen der eigentlichen Schaftaufnahme und dem Schaft Kunststoffspritzmasse gleichfalls vorhanden ist, beispielsweise durch eine dünne Schicht Kunststoffspritzmasse in der Aufnahmekörperbohrung. Bevorzugt ist dabei eine Schichtdicke zwischen 0,02 und 1 mm, bevorzugt weniger als 1 mm. Schichtdicken unter 0,02 mm gefährden das vollständige Eindringen von Kunststoffspritzmasse um den Schaft herum in der Aufnahmekörperbohrung; es sei aber darauf hingewiesen, dass die minimale Schichtdicke u.a. abhängig ist von der Wärmekapazität des Aufnahmekörpers, der Einspritztemperatur der Kunststoffspritzmasse der Viskosität, dem Einspritzdruck usw. Bevorzugt sind Schichtdicken um 0,2 mm. Noch wesentlich größere Schichtdicken können zu einer Schräglage des Schaftes in der Bohrung führen, was eine nicht exakte Ausrichtung des Schaftes im Taststift zur Folge haben kann. Die Umspritzung in einer Hülse und insbesondere dem lichten Raum zwischen Hülse und Schaft hat den Vorteil einer sehr großflächigen Fixierung, was dazu beiträgt, den Taststift sicher zu halten. Es sei darauf hingewiesen, dass der Schaft im Bereich der Umspritzung gerändelt sein kann und auch der Innenbereich der Aufnahmebohrung gerändelt oder auf andere Weise nicht vollkommen kreisrund im Querschnitt gemacht werden kann. Dies verringert die Gefahr eines Lösens des Schaftes durch Torsionsbelastungen. Weiter sei darauf hingewiesen, dass andere Formen der Aufrauung oder dergleichen ebenfalls dazu beitragen können, den Schaft besser in der Aufnahmehülse zu fixieren.

Besonders bevorzugt ist es, wenn mit der Kunststoffmasse gleichzeitig ein Griffkörper gebildet wird, mit welchem sich der Ankopplungskörper leicht an der Koordinatenmessmaschine anbringen lässt. Der Griffkörper wird typisch die Hülse oder dergleichen vollständig umgeben, was zu dessen Erwärmung während des Spritzgusses beiträgt und so zu einer verbesserten Fixierung beitragen kann. Dies kann sogar Werkzeug entbehrlich machen, was sonst benötigt wird, um Taststifte an der Koordinatenmessmaschine zu wechseln. Dies trägt zu einer weiteren Verringerung der Betriebskosten bei, weil sich dadurch der Wechsel schneller vollziehen lässt. Es sei darauf hingewiesen, dass gegebenenfalls die Hülsen und/oder der Griffkörper auch für den Angriff mit einem Werkzeug wie einem Schlüssel oder dergleichen ausgebildet sein kann, was insbesondere das Lösen eines Taststiftes erleichtern kann.

Schutz wird auch beansprucht für ein Verfahren zur Herstellung eines Taststiftes, bei dem ein Schaft in einen Aufnahmekörper eingeführt und dann mittels Kunststoffspritzguss daran und/oder darin fixiert wird.

Die Erfindung wird im Folgenden nur beispielhaft anhand der Zeichnungen beschrieben. In dieser ist gezeigt durch
- Fig. 1: eine Querschnittsansicht eines Taststiftes der vorliegenden Erfindung;
- Fig. 2: eine Draufsicht auf den Taststift von der Seite;
- Fig. 3: eine Draufsicht auf den Taststift von der Spitze her;
- Fig. 4: eine perspektivische Ansicht des Taststiftes.

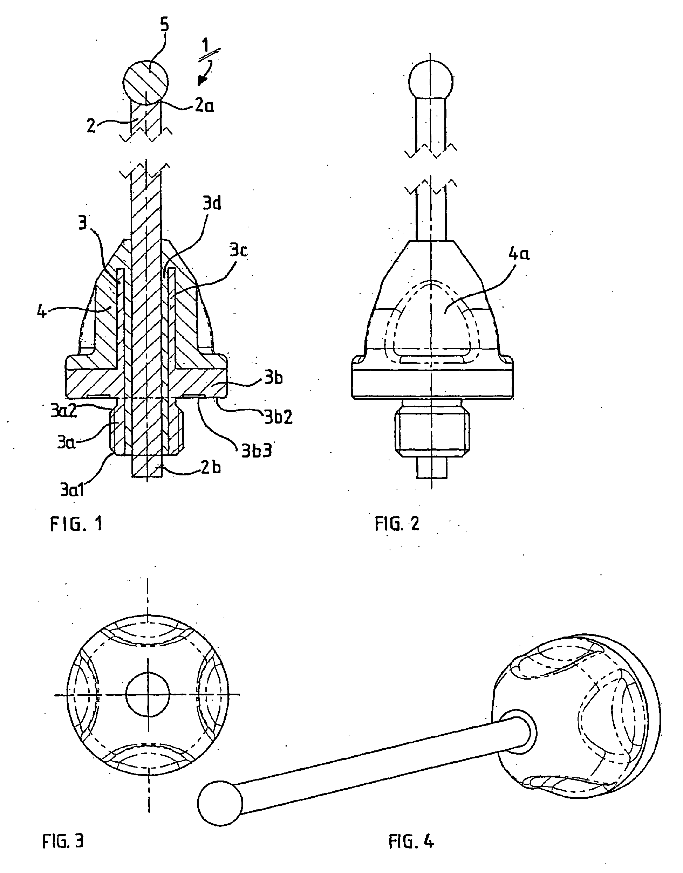

Nach Figur 1 umfasst ein allgemein mit 1 bezeichneter Taststift 1 einen Schaft 2 und einen diesen fixierenden Ankopplungskörper 3 zur Ankopplung an eine Koordinatenmessmaschine (nicht gezeigt), wobei der Schaft 2 im Aufnahmekörper 3 durch Spritzgussmasse 4 fixiert ist.

Der Taststift 1 dient im vorliegenden Ausführungsbeispiel dazu, an einer Koordinatenmessmaschine befestigt zu werden, um hochgenau Messungen von Werkstückkoordinaten scannend oder tastend durchführen zu können.

Der Schaft 2 ist im vorliegenden Ausführungsbeispiel wie bevorzugt und möglich aus Hartmetall gebildet, könnte aber auch aus Kohlefaser, Kohlefaserverbundwerkstoffen oder anderen Materialien gebildet sein. An der im Betrieb zum Werkstück weisenden Spitze ist eine Kugel 5 aus geeignetem Material, hier aus Rubin vorgesehen, die auf übliche Weise mit dem Schaft 2 verbunden ist, hier beispielsweise durch eine komplementäre Formbildung an der Schaftspitze 2a und Einkleben der Kugel 5 mittels bekannter Kleber; auf andere Verbindungsmöglichkeiten wie Löten sei hingewiesen. Es sei weiter darauf hingewiesen, dass die Kugel 5 vor oder nach Vorsehen der Spritzgussmasse und somit vor oder nach Bildung der Fixierung angebracht werden kann.

Der Ankopplungskörper 3 ist im vorliegenden Fall aus Werkzeugstahl hergestellt und weist zur Koordinatenmessmaschine hin einen Gewindeansatz 3a auf, der beispielsweise mit mehreren Windungen eines M5-Gewindes versehen sein kann, wobei anfangs- und Endbereiche des Gewindeansatzes 3a angefast sein können, vergl. 3al, 3a2. Der Gewindeansatz 3a ist von einem sich weit über den Gewindeansatz 3a in radialer Richtung erstreckenden und damit einstückigen Ansatz 3b umgeben, der zum Anschlag des Aufnahmekörpers an einer Koordinatenmessmaschine nach Eindrehen des Gewindes 3a in ein entsprechendes Gegenelement mit einer ebenen Anschlagfläche 3b2 versehen ist, die im Übrigen zum Schaft hin eine ringförmige Eintiefung 3b3 aufweist, so dass die eigentliche Anlage des Aufnahmekörpers an dem Gegenstück der Koordinatenmessmaschine an einem radial weit außen liegenden Bereich erfolgt, was zu einer präziseren Winkelausrichtung des mit der Koordinatenmessmaschine verbundenen Taststiftes relativ zu dieser führt. In axialer Richtung setzt sich oberhalb der Anschlagschulter 3b der Ankopplungskörper 3 mit einem ebenfalls einstückig integrierten und gebildeten Rohransatz 3c fort. Dieser Rohransatz 3c erstreckt sich in Richtung des Schaftes 2 um etwa die doppelte Länge von Gewindekörper und Anschlagplatte. Prinzipiell ist es möglich, den Rohransatz 3c noch länger zu gestalten, insbesondere dann, wenn sehr lange Schäfte 2 verwendet werden; allerdings erfordert dies dann gegebenenfalls für längere Schäfte andere Werkzeuge bei der Umspritzung und es besteht die Gefahr, dass die Spritzgussmasse 4 nicht mehr vollständig in den lichten Bereich 3d zwischen Schaft 2 und Rohransatz 3c eindringt. Es sei erwähnt, dass die Einstückigkeit des Ankopplungskörpers mit dem Rohransatz bzw. dem Gewindekörper vorteilhaft und bevorzugt, aber nicht zwingend ist.

Wie erkennbar, tritt der Schaft 2 durch das Rohr 3c hindurch und über dessen Ende hinaus, so dass er über den Ankopplungskörper 3 auf der von der Tastkugel 5 abgewandten Seite übersteht. Der Überstand 2b ist mindestens so lang, dass bei der Umspritzung der Schaft 2 gut in einer Form fixiert werden kann, damit keine Verschiebung relativ zum Aufnahmekörper 3 erfolgt. Andererseits steht der Schaft hinten nicht so weit über, dass er das Befestigen des Aufnahmekörpers an der Werkzeugmaschine beeinträchtigen würde.

Die Spritzgussmasse 4 ist aus herkömmlichen Materialien wie fasergefüllten Kunststoffen gebildet und durchdringt den lichten Bereich 3d zwischen der Innenseite des Aufnahmerohres 3c bzw. der Anschlagschulter 3b bzw. dem Gewindeansatz 3a des Ankopplungskörpers 3 und dem Schaft 2 vollständig. Außerhalb des Aufnahmeröhrchens 3c ist auf der zur Tastspitze hin gewandten Seite der Anschlagplatte 3b die Spritzgussmasse 4 so geformt, dass ein ergonomisch leichtes Ergreifen des Taststiftes ermöglicht wird, wozu zum Beispiel Mulden 4a in den Spritzgussmantel um das Röhrchen 3c eingeformt sind. Der Spritzgussmantel ist des weiteren ein Stück weit über des der Tastspitze bzw. Tastkugel 5 zugewandten Ende des Röhrchens 3c hinausgezogen, um diese Kante zu schützen und vollständing zu umfassen, was die Fixierung durch Schrumpfen bei Erkalten begünstigt.

Die Anordnung wird hergestellt wie folgt:

Zunächst wird ein Schaft 2 bereitgestellt, in dem bereits eine Formgebung für die spätere Verklebung mit einer Tastkugel an der Spitze vorgesehen ist. Weiter wird ein Ankopplungskörper 3 bereitgestellt. Der Schaft wird durch den Ankopplungskörper hindurchgesteckt und mit diesem zusammen in eine Spritzgussform gebracht. Dabei wird durch die Spritzgussform eine exakte relative Fixierung von Ankopplungskörper 3 und Schaft 2 erzielt, und zwar aufgrund der beidseitigen Fixierung des Schaftes, denn der Ankopplungskörper kann definiert an nicht umspritzten Bereichen wie dem Gewinde positioniert werden, während der Schaft an seinen Enden gehalten wird. Bevorzugt ist dabei die Fixierung sowohl am Vorder- als auch Hinterende des Schaftes sowie am Ankopplungskörper 3.

Danach wird mit großem Spritzdruck Kunststoffmasse eingespritzt und strömt um das Röhrchen 3c herum und in dieses hinein. Durch Erhärtung der Kunststoffspritzmasse ist der Schaft am Aufnahmekörper fixiert und es kann nun die Kugel 5 mit dem Schaft verbunden werden.

Es sei darauf hingewiesen, dass es prinzipiell möglich ist, den Kugelverbindungsschritt auch vor der Spritzung durchzuführen.

## Patentansprüche

1. Taststift (1) mit einem Schaft (2) und einem diesen fixierenden Ankopplungskörper (3) zur Ankopplung an eine Koordinatenmessmaschine, **dadurch gekennzeichnet dass** der Schaft (2) im Ankopplungskörper (3) durch Spritzgussmasse (4) fixiert ist.

2. Taststift nach dem vorhergehenden Anspruch, **dadurch gekennzeichnet, dass** der Schaft aus Metall, bevorzugt Hartmetall hergestellt ist.

3. Taststift nach einem der vorhergehenden Ansprüche, **dadurch gekennzeichnet, dass** an der Schaftspitze eine Tastkugel vorgesehen ist.

4. Taststift nach einem der vorhergehenden Ansprüche, **dadurch gekennzeichnet, dass** der Ankopplungskörper eine Schaftaufnahmebohrung aufweist.

5. Taststift nach dem vorhergehenden Anspruch, **dadurch gekennzeichnet, dass** die Schaftaufnahmebohrung als Durchgangsbohrung gebildet ist.

6. Taststift nach dem vorhergehenden Anspruch, **dadurch gekennzeichnet, dass** der Schaft durch den Ankopplungskörper hindurchtritt.

7. Taststift nach einem der vorhergehenden Ansprüche, **dadurch gekennzeichnet, dass** Ankopplungskörper ein Gewinde zur Ankopplung an eine Koordinatenmessmaschine aufweist.

8. Taststift nach dem vorhergehenden Anspruch, **dadurch gekennzeichnet, dass** das Gewinde von einer Anschlagplatte umgeben ist.

9. Taststift nach einem der vorhergehenden Ansprüche, **dadurch gekennzeichnet, dass** eine Bohrung zwischen Aufnahmehülse des Ankopplungskörpers und Schaft Kunststoffspritzmasse vorhanden ist, insbesondere mit einer Schichtdicke von im Mittel zwischen 0,02 und 1 mm, bevorzugt um 0,1 bis 0,4 mm, besonders bevorzugt um 0.2mm Schichtdicke.

10. Taststift nach einem der vorhergehenden Ansprüche, **dadurch gekennzeichnet, dass** die Kunststoffspritzmasse einen Griffkörper zum Anziehen des Ankopplungskörpers an der Koordinatenmessmaschine umfasst.

11. Verfahren zur Herstellung eines Taststiftes (1) **dadurch gekennzeichnet, dass** ein Schaft (2) in einen Ankopplungskörper (3) eingeführt und darin mittels Kunststoffspritzguss (4) fixiert wird.

## Claims

1. Feeler (1) having a shaft (2) and a coupling element (3), which fixes the latter, for coupling to a coordinate measuring machine, **characterized in that** the shaft (2) is fixed in the coupling element (3) by injection moulding compound (4).

2. Feeler according to the preceding claim, **characterized in that** the shaft is produced from metal, preferably hard metal.

3. Feeler according to one of the preceding claims, **characterized in that** a feeler ball is provided on the shaft tip.

4. Feeler according to one of the preceding claims, **characterized in that** the coupling element has a shaft-holding bore.

5. Feeler according to the preceding claim, **characterized in that** the shaft-holding bore is formed as a through-bore.

6. Feeler according to the preceding claim, **characterized in that** the shaft passes through the coupling element.

7. Feeler according to one of the preceding claims, **characterized in that** the coupling element has a thread for coupling to a coordinate measuring machine.

8. Feeler according to the preceding claim, **characterized in that** the thread is surrounded by a stop plate.

9. Feeler according to one of the preceding claims, **characterized in that** plastic injection-moulding compound is present in a bore between the holding sleeve of the coupling element and shaft, in particular with a layer thickness of on average between 0.02 and 1 mm, preferably approximately 0.1 to 0.4 mm, with particular preference a layer thickness of about 0.2 mm.

10. Feeler according to one of the preceding claims, **characterized in that** the plastic injection-moulding compound comprises a grip body for tightening the coupling element on the coordinate measuring machine.

11. Method for producing a feeler (1) **characterized in that** a shaft (2) is introduced into a coupling element (3) and fixed therein by means of plastic injection moulding (4).

## Revendications

1. Palpeur (1) comprenant une tige (2) et un corps d'accouplement (3) la fixant, pour l'accouplement à un dispositif de mesure de coordonnées, **caractérisé en ce que** la tige (2) est fixée dans le corps d'accouplement (3) par une composition de moulage par injection (4).

2. Palpeur selon la revendication précédente, **caractérisé en ce que** la tige est fabriquée en métal, de préférence en métal dur.

3. Palpeur selon l'une quelconque des revendications précédentes, **caractérisé en ce que** l'on prévoit une bille de palpeur sur la pointe de la tige.

4. Palpeur selon l'une quelconque des revendications précédentes, **caractérisé en ce que** le corps d'accouplement présente un alésage de réception de la tige.

5. Palpeur selon la revendication précédente, **caractérisé en ce que** l'alésage de réception de la tige est réalisé sous forme d'alésage traversant.

6. Palpeur selon la revendication précédente, **caractérisé en ce que** la tige traverse le corps d'accouplement.

7. Palpeur selon l'une quelconque des revendications précédentes, **caractérisé en ce que** le corps d'accouplement présente un filetage pour l'accouplement à un dispositif de mesure de coordonnées.

8. Palpeur selon la revendication précédente, **caractérisé en ce que** le filetage est entouré par une plaque de butée.

9. Palpeur selon l'une quelconque des revendications précédentes, **caractérisé en ce que** dans un alésage entre la douille de réception du corps d'accouplement et la tige est prévue une composition d'injection en plastique, en particulier avec une épaisseur de couche comprise en moyenne entre 0,02 et 1 mm, de préférence d'environ 0,1 à 0,4 mm, particulièrement préférablement de 0,2 mm d'épaisseur de couche.

10. Palpeur selon l'une quelconque des revendications précédentes, **caractérisé en ce que** la composition d'injection en plastique comprend un corps de préhension pour attirer le corps d'accouplement contre le dispositif de mesure de coordonnées.

11. Procédé de fabrication d'un palpeur (1), **caractérisé en ce qu'**une tige (2) est introduite dans un corps d'accouplement (3) et y est fixée au moyen d'un moulage par injection de plastique (4).
